## Europäisches Patentamt
## European Patent Office
## Office européen des brevets

(19)

(11) Veröffentlichungsnummer: **0 078 969**
**B1**

(12) **EUROPÄISCHE PATENTSCHRIFT**

(45) Veröffentlichungstag der Patentschrift:
29.05.85

(51) Int. Cl.⁴: **E 05 B 41/00,** F 16 P 3/08,
B 65 D 90/00, B 65 G 43/00

(21) Anmeldenummer: 82109839.9

(22) Anmeldetag: 25.10.82

(54) Überwachungseinrichtung für Container.

(30) Priorität: 10.11.81 CH 7198/81

(43) Veröffentlichungstag der Anmeldung:
18.05.83 Patentblatt 83/20

(45) Bekanntmachung des Hinweises auf die Patenterteilung:
29.05.85 Patentblatt 85/22

(84) Benannte Vertragsstaaten:
AT BE DE FR GB IT NL

(56) Entgegenhaltungen:
DE - A - 2 259 369
DE - A - 2 659 017
FR - A - 2 166 606
US - A - 3 618 874
US - A - 3 824 819

(73) Patentinhaber: INVENTIO AG, Seestrasse 55,
CH-6052 Hergiswil NW (CH)

(72) Erfinder: Frömberg, Günter, Am Kiesteich 13,
D-1000 Berlin 20 (DE)
Erfinder: Krüger, Marlis, Alt-Lichtenrade 22,
D-1000 Berlin 49 (DE)
Erfinder: Stiller, Wolfgang, Spanische Allee 63,
D-1000 Berlin 38 (DE)

BUNDESDRUCKEREI BERLIN

## Beschreibung

Die Erfindung betrifft eine Überwachungseinrichtung für, auf einer vorgegebenen Förderstrecke verschiebbare Container mit Türflügelverriegelung.

Durch die DE-OS 2 659 017 ist ein derartiger Container mit Flügeltüren und einem Schließmechanismus bekanntgeworden. Die Flügeltüren können bei diesem Container automatisch oder manuell geöffnet und geschlossen und in Öffnungs- oder Schließposition gehalten werden. Der Schließmechanismus ist am Unterteil des Containers angeordnet und weist unter anderem pro Türflügel einen Rasthebel auf, der die untere Kante des Türflügels in Schließposition umgreift und mittels einer auf die Drehachse des Rasthebels ein Drehmoment ausübenden Zugfeder festhält.

Der Nachteil dieser Anordnung liegt darin, daß der Rasthebel bei offener und geschlossener Flügeltüre durch die Zugfeder in gleicher Schließstellung gehalten wird. So kann es vorkommen, daß sich ein am Rasthebel anliegender, scheinbar verriegelter Türflügel während des Transportes öffnet und irgendwo auf der Förderstrecke ansteht und sich verklemmt. Neben der Beschädigung des Containers kann das gesamte Ladegut ausgekippt und die Förderstrecke für längere Zeit blockiert werden.

Der Erfindung liegt die Aufgabe zugrunde, eine Überwachungseinrichtung für Container zu schaffen, die es ermöglicht auf einfachste Art und Weise unverriegelte Türflügel festzustellen und den Weitertransport eines Containers mit unverriegeltem Türflügel zu verhindern. Gleichzeitig soll die Überwachungseinrichtung das Mitführen von auf dem Dachblech des Containers liegengelassenen, größeren Gegenständen verhindern. Bei Containerausführungen mit einer Öffnung im Bereich des Dachbleches soll der Weitertransport eines Containers, bei dem ein Teil des Transportgutes über den oberen Rand hinausragt, ausgeschlossen werden.

Diese Aufgabe wird durch die in den Ansprüchen gekennzeichnete Erfindung gelöst.

Die durch die Erfindung erreichten Vorteile sind im wesentlichen darin zu sehen, daß die Türflügel-Verriegelung zwei unterschiedliche Stellungen, eine unverriegelte und eine verriegelte, aufweist, die sich dadurch anzeigt, daß der Betätigungszapfen mehr oder weniger über die Dachfläche des Containers vorsteht. Dieser Umstand gestattet es, jeden Container, beispielsweise durch ein Joch, zu überwachen und diejenigen Container mit nicht einwandfrei verriegelten Türflügeln am Durchschieben zu hindern.

Ein weiterer Vorteil besteht darin, daß das Mitführen von auf dem Dachblech des Containers abgesetzten größeren Gegenständen bzw. das Herausragen von Transportgütern aus einem oben offenen Container von der Überwachungseinrichtung verhindert wird.

Der gleiche Betätigungszapfen der die Verriegelung des Türflügels anzeigt, dient auch zur Entriegelung des Türflügels. Bei gedrücktem Betätigungszapfen ist der Türflügel entriegelt und kann geöffnet werden.

Auf beiliegenden Zeichnungen ist ein Ausführungsbeispiel der Erfindung dargestellt, das im folgenden näher erläutert wird.

Fig. 1 zeigt die Gesamtansicht eines Containers mit beispielsweise zwei leicht geöffneten Türflügeln, vor dem Einschieben in ein Überwachungsjoch,

Fig. 2 zeigt einen Haltemechanismus bei verriegeltem Türflügel,

Fig. 3 zeigt den Haltemechanismus bei unverriegeltem Türflügel.

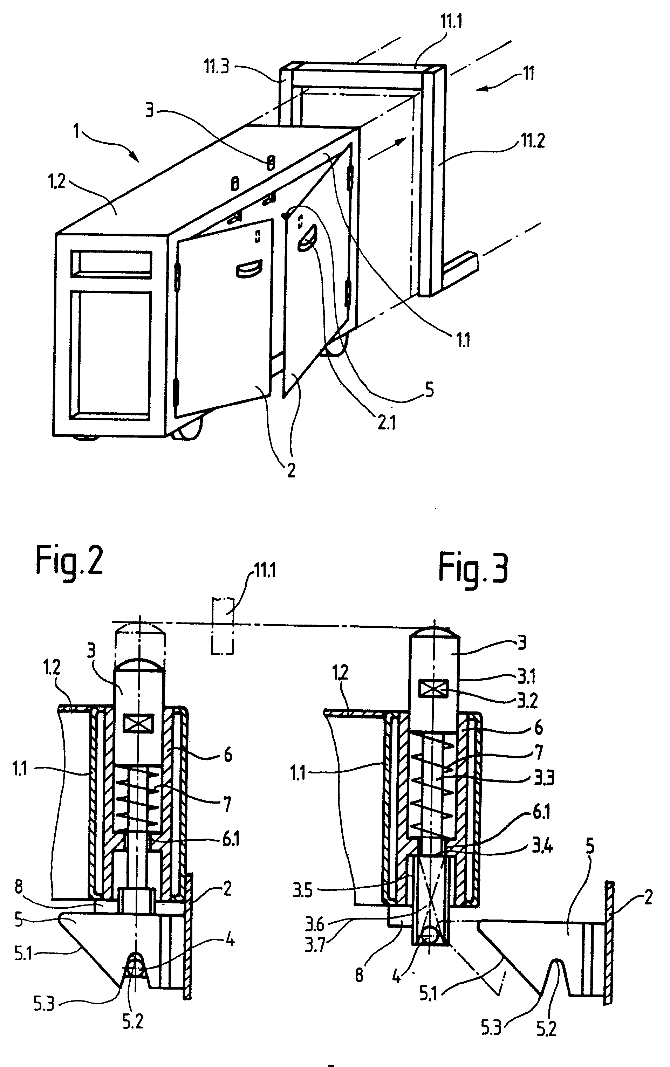

Bei den Fig. 1, 2 und 3 sind entsprechende Teile gleich bezeichnet. Der Haltemechanismus für einen Türflügel 2 ist im Rahmen 1.1 des Containers 1 angeordnet und besteht aus einem Führungskörper 6, einem Betätigungszapfen 3 und einer Feder 7. Am Türflügel 2 ist ein Riegel 5 angeordnet. Der Betätigungszapfen 3, bestehend aus einem zylindrischen Führungskopf 3.1 mit zwei Schlüssel-Anfräsungen 3.2, einem zylindrischen Führungsschaft 3.3 und einem prismatischen Fußteil 3.5 ist im Führungskörper 6 senkrecht verschiebbar gelagert und ragt bei unverriegeltem Türflügel mehr als bei verriegeltem Türflügel über die Dachfläche des Containers hinaus. Der Fußteil 3.5 besitzt gegen den Führungsschaft hin einen Anschlag 3.4 und seitlich zwei einander gegenüberliegende Abflachungen 3.6, 3.7, an deren einem Ende ein rechtwinklig abstehender Verriegelungszapfen 4 angeordnet ist. Der rohrförmige Führungskörper 6 besitzt in der Bohrung einen Steg 6.1 mit einer kleineren Bohrung für die Lagerung des Führungsschaftes 3.3 des Betätigungszapfens 3. Die Feder 7 ist in der Bohrung des Führungskörpers eingelegt und zwischen dem Führungskopf des Betätigungszapfens und dem Steg 6.1 des Führungskörpers 6 mit leichter Vorspannung gefangen. Ein am unteren Ende des Führungskörpers 6 angeordnetes flaches Führungsstück 8, das an der, dem Verriegelungszapfen 4 gegenüberliegenden Abflachung 3.7 des Fußteils 3.5 anliegt, verhindert das Drehen des Betätigungszapfens. Der Riegel 5 des Türflügels 2 besitzt eine schräge Auflauffläche 5.1 und eine anschließende Haltenut 5.2 für die Aufnahme des Verriegelungszapfens 4. Ein Kulminationspunkt als Übergang zwischen der schrägen Auflauffläche und der Haltenut wird mit 5.3 bezeichnet. An den Türflügeln angeordnete Handgriffe werden mit 2.1 bezeichnet. Das nach einer Beschickungsstelle aufgestellte Überwachungsjoch 11 setzt sich zusammen aus zwei Pfosten 11.2, 11.3 und einem Querbalken 11.1.

Die vorstehend beschriebene Einrichtung arbeitet wie folgt: Beim manuellen Schließen werden die Türflügel 2 des Containers 1 gegen den Containerkörper gedrückt. Die Spitze des Riegels 5 schiebt sich dabei mit der schrägen Auflauffläche 5.1 zwischen den Führungskörper 6 und den Verriegelungszapfen 4 des Haltemechanismus. Sobald die schräge Auflauffläche des Riegels den Verriegelungszapfen berührt, wird der Betätigungszapfen 3 nach unten gezogen, bis der Verriegelungszapfen 4 den Kulminationspunkt 5.3 des Riegels erreicht und durch die Kraft der Feder 7 in die Haltenut 5.2 des Riegels springt. In dieser Stellung ist der Türflügel 2 geschlossen und verriegelt. Bei der ursprünglich eingenommenen Ruhelage, bei unverriegeltem Türflügel, überragt der Betätigungszapfen 3 um eine bestimmte begrenzte Höhe die Dachfläche des Containers. Durch die Verriegelungsoperation wird der Betätigungszapfen 3 um ein gewisses Maß nach unten gezogen und dabei die vorstehende Höhe verkleinert. Diese beiden unterschiedlichen Stellungen des Betätigungszapfens 3 werden zur Überwachung des Containers ausgenutzt, indem innerhalb der Höhendifferenz die Unterkante des Querbalkens 11.1 des Überwachungsjoches 11 angeordnet wird. Das Überwachungsjoch, das nach einer Beschickungsstelle aufgestellt ist, verhindert dadurch das Einschieben eines Containers 1 mit unverriegeltem Türflügel 2 in die nachfolgende Transportanlage, da der Betätigungszapfen 3 am Querbalken 11.1 des Überwachungsjoches 11 anstößt. Ein Einschieben in die nachfolgende Transportanlage ist erst dann möglich, wenn die Türflügel 2 einwandfrei verriegelt sind und jeder Betätigungszapfen 3 die eingezogene Durchfahrtstellung für den Transport eingenommen hat. Der obenerwähnte Querbalken 11.1 des Überwachungsjoches verhindert zudem beim Durchschieben von Containern mit einwandfrei verriegelten Türflügeln das Mittransportieren von eventuell auf der Dachfläche 1.2 des Containers abgesetzten, größeren Gegenständen, indem er sie von der Dachfläche abschiebt. Er verhindert damit größere Schäden die entstehen könnten, wenn solche Gegenstände innerhalb der nachfolgenden Transportanlage von der Deckfläche herunterfallen und sich zwischen Fahrbahn und Container verklemmen würde.

Zum Entriegeln und Öffnen des Türflügels ist ein Druck auf den Betätigungszapfen und ein gleichzeitiges Ziehen am Handgriff 2.1 des entsprechenden Türflügels 2 erforderlich. Eine zusätzliche, nicht beschriebene Einrichtung, die den Türflügel 2 nach dem Entriegeln selbsttätig, in öffnendem Sinne vom Container 1 wegschwenkt, macht das gleichzeitige Ziehen am Handgriff 2.1 überflüssig.

Anstelle der im Beispiel vorgeschlagenen Überwachungseinrichtung mit einer Querschranke in Form eines starren Querbalkens, welcher die Container mit unverriegelten Türflügeln mechanisch blockiert und größere auf dem Dachblech des Containers abgesetzte Gegenstände abschiebt, könnte auch ein Querbalken mit einer Kontaktleiste eingesetzt sein, welche durch den vorstehenden Betätigungszapfen eines nicht verriegelten Türflügels oder durch einen auf dem Dachblech des Containers abgesetzten größeren Gegenstand bewegt wird und einen im Sicherheitskreis der Steuerung der Transporteinrichtung angeordneten Kontakt betätigt. Die gleiche Funktion wie eine Kontaktleiste könnte auch eine Lichtschranke ausüben. Bei einem durch einen vorstehenden Betätigungszapfen oder durch einen auf dem Dachblech abgesetzten Gegenstand erzeugten Unterbrechen des Lichtstrahles der Lichtschranke würde der im Sicherheitskreis der Steuerung der Transporteinrichtung angeordnete Kontakt betätigt.

Anstelle des Fußteiles 3.5 des Betätigungszapfens 3 mit den Abflachungen 3.6 und 3.7 und dem rechtwinklig abstehenden Verriegelungszapfen 4 könnte auch ein U-Bügel vorgesehen werden, in dessen beiden Schenkeln am unteren Ende ein Verriegelungszapfen gelagert ist. Der am Container-Türflügel angeordnete Riegel würde beim Verriegelungsvorgang zwischen die beiden Schenkel des U-Bügels greifen und mit seiner schrägen Auflauffläche den Betätigungszapfen über den Verriegelungszapfen nach unten ziehen. Die verdrehsichere Führung des Betätigungszapfens könnte auch dadurch erfolgen, daß der Schaft 3.3 als Vierkant ausgebildet wird, der in einem Innenvierkant im Steg 6.1 des Führungskörpers 6 gleitet.

Der oben beschriebene Haltemechanismus könnte auch teilweise in umgekehrtem Sinne angeordnet sein. Beispielsweise könnte am innenliegenden Ende des Betätigungszapfens, anstelle des U-Bügels ein Riegel mit einer entsprechenden Auflauffläche und einer Haltenut und am Türflügel anstelle eines Riegels ein U-Bügel angeordnet sein, in dessen beiden Schenkeln am äußeren Ende ein Verriegelungszapfen gelagert ist.

## Patentansprüche

1. Überwachungseinrichtung für, auf einer vorgegebenen Förderstrecke verschiebbare Container (1) mit Türflügelverriegelung, dadurch gekennzeichnet, daß auf der vorgegebenen Förderstrecke nach einer Beschickungsstelle um eine kleine Distanz über dem Dachblech (1.2) eines durchlaufenden Containers (1) eine Querschranke (11.1) vorgesehen ist und die Türverriegelung einen Betätigungszapfen aufweist, der bei geschlossenem, verriegeltem Türflügel (2) in seiner Durchfahrtstellung in eine über dem Dachblech liegende Bewegungsbahn ragt, die unter der Querschranke hindurchführt, und bei geöffnetem Türflügel in seiner Blockierstellung in eine über dem Dachblech liegende Bewegungsbahn ragt, die nicht mehr unter der Querschranke hindurchführt.

2. Überwachungseinrichtung nach Anspruch 1, dadurch gekennzeichnet, daß der Betätigungszapfen (3) der Türverriegelung in einem im Dachblech (1.2) des Containers (1) angeordneten Führungskörper (6) senkrecht, gleitend geführt ist, an seinem unteren Ende außerhalb des Führungskörpers (6) einen rechtwinklig abstehenden Verriegelungszapfen (4) aufweist und der Türflügel (2) einen Riegel (5) besitzt, wobei der Betätigungszapfen (3) bei geöffnetem Türflügel (2) unter der Kraft einer Feder (7) in die Blockierstellung gedrückt ist und bei geschlossenem, verriegeltem Türflügel (2) durch den zwischen dem Führungskörper (6) und dem Verriegelungszapfen (4) eingeschobenen Riegel (5) des Türflügels (2) entgegen der Wirkung der Kraft der Feder (7) in der Durchfahrtstellung gehalten wird.

3. Überwachungseinrichtung nach Anspruch 1, dadurch gekennzeichnet, daß die Querschranke ein starrer Querbalken (11.1) eines von zwei Pfosten (11.2, 11.3) getragenen Überwachungsjoches ist.

4. Überwachungseinrichtung nach Anspruch 3, dadurch gekennzeichnet, daß am Querbalken (11.1) eine durch den Betätigungszapfen, beziehungsweise durch auf dem Dachblech (1.2) des Containers (1) abgesetzte größere Gegenstände betätigbare Kontaktleiste angeordnet ist.

5. Überwachungseinrichtung nach Anspruch 2, dadurch gekennzeichnet, daß der Betätigungszapfen (3) am oberen Ende einen zylindrischen Führungskopf (3.1), am unteren Ende einen prismatischen, mit zwei einander gegenüberliegenden Abflachungen (3.6, 3.7), einem oberen Anschlag (3.4) und dem an der unteren Seite der einen Abflachung (3.6) angebrachten Verriegelungszapfen (4) versehenen Fußteil (3.5) und als Zwischenstück einen zylindrischen Schaft (3.3) aufweist und der Führungskörper (6) am unteren Ende ein flaches Führungsstück (8) besitzt, wobei der Betätigungszapfen (3) an der dem Verriegelungszapfen (4) abgewandten Abflachung (3.7) durch das Führungsstück (8) verdrehsicher geführt ist.

6. Überwachungseinrichtung nach Anspruch 2, dadurch gekennzeichnet, daß der Riegel (5) eine schräge Auflauffläche (5.1) und eine für die Aufnahme des Verriegelungszapfens bestimmte Haltenut (5.2) aufweist.

## Claims

1. Surveillance arrangement for containers (1) with door wing latching mechanism, which are displaceable on a predetermined conveying path, characterised thereby, that a transverse barrier (11.1) is provided at a small distance above the roof plate (1.2) of a container (1) passing through and downstream of a loading point on the predetermined conveying path and the door latching mechanism displays an actuating spigot which, when the door wing (2) is closed and latched, in its passage setting projects into a movement path which lies above the roof plate and passes through below the transverse barrier and, when the door wing is opened, in its blocking setting projects into a movement path which lies above the roof plate and no longer passes through below the transverse barrier.

2. Surveillance arrangement according to claim 1, characterised thereby, that the actuating spigot (3) of the door latching mechanism is slidingly guided vertically in a guide body (6) arranged in the roof plate (1.2) of the container (1) and at its lower end and externally of the guide body (6) displays a latching spigot (4) projecting at right angles and the door wing (2) possesses a latching bar (5), wherein, the actuating spigot (3), when the door wing (2) is opened, is pressed under the force of a spring (7) into the blocking setting and, when the door wing (2) is closed and latched, is held in the passage setting against the force of the spring (7) by the latching bar (5), pushed in between the guide body (6) and the latching spigot (4), of the door wing (2).

3. Surveillance arrangement according to claim 1, characterised thereby, that the transverse barrier is a rigid transverse beam (11.1) of a supervisory yoke carried by two posts (11.2, 11.3).

4. Surveillance arrangement according to claim 3, characterised thereby, that a contact strip, which is actuable through the actuating spigot or through larger objects set down on the roof plate (1.2) of the container (1), is arranged at the transverse beam (11.1).

5. Surveillance arrangement according to claim 2, characterised thereby, that the actuating spigot (3) displays a cylindrical guide head (3.1) at the upper end, a prismatic foot part (3.5), which is provided with two mutually opposite flattenings (3.6, 3.7), an upper abutment (3.4) and the latching spigot (4) mounted at the lower side of the one flattening (3.6), at the lower end and a cylindrical shaft (3.3) as intermediate piece and the guide body (6) possesses a flat guide member (8) at the lower end, wherein the actuating spigot (3) is guided secure against rotation by the guide member (8) at the flattening (3.7) remote from the latching spigot (4).

6. Surveillance arrangement according to claim 2, characterised thereby, that the latching bar (5) displays an inclined ramp surface (5.1) and a retaining groove (5.2) intended for the reception of the latching spigot.

## Revendications

1. Dispositif de surveillance pour conteneur (1) pouvant être déplacé sur une voie prédéterminée de transport et comportant un système de verrouillage de battants de porte, caractérisé en ce que, sur la voie prédéterminée de transport et en aval d'un poste de chargement, est prévue une barrière transversale (11.1) située à courte distance au-dessus de la tôle du plateau supérieur (1.2) d'un conteneu (1) en cours de transport et le système de verrouillage de portes comporte un téton d'actionnement qui, lorsque le battant de porte (2) est fermé et verrouillé, fait saillie, dans sa position d'autorisation de passage, sur une trajectoire de déplacement située au dessus de la tôle du plateau et passant au-dessous de la barrière transversale, et, lorsque le battant de porte est ouvert, fait saillie, dans sa position de blocage, sur une trajectoire de déplacement au-dessus de la tôle du plateau supérieur et ne passant plus au-dessous de la barrière transversale.

2. Dispositif de surveillance selon la revendication 1, caractérisé en ce que le téton d'actionnement (3) du système de verrouillage de porte est guidé de façon à pouvoir coulisser dans une direction verticale, à l'intérieur d'un corps de guidage (6) disposé dans la tôle du plateau supérieur (1.2) du conteneur (1) et comporte, sur son extrémité inférieure et à l'extérieur du corps de guidage (6) un téton de verrouillage (4) saillant à angle droit et le battant de porte (2) possède un verrou (5), auquel cas, lorsque le battant de porte (2) est ouvert, le téton d'actionnement (3) est repoussé dans sa position de blocage sous l'action de la force d'un ressort (7) et, lorsque le battant de porte (2) est fermé et verrouillé, il est maintenu dans sa position d'autorisation de passage, par le verrou (5) du battant de porte (2), inséré entre le corps de guidage (6) et le téton de verrouillage (4), à l'encontre de la force du ressort (7).

3. Dispositif de surveillance selon la revendication 1, caractérisé en ce que la barrière transversale est une barre transversale rigide (11.1) d'un portique de contrôle porté par deux montants (11.2, 11.3).

4. Dispositif de surveillance selon la revendication 3, caractérisé en ce qu'une barrette de contact, pouvant être actionnée par le téton d'actionnement ou par des objets de grande taille posés sur la tôle du plateau supérieur (1.2) du conteneur (1), est montée sur la barre transversale (11.1).

5. Dispositif de surveillance selon la revendication 2, caractérisé en ce que le téton d'actionnement (3) comporte, sur son extrémité supérieure, une tête cylindrique de guidage (3.1), sur son extrémité inférieure une partie formant un talon prismatique (3.5) munie de deux méplats (3.6, 3.7) mutuellement opposés, d'une butée supérieure (3.4) et du téton de verrouillage (4) monté sur la face inférieure de l'un des méplats (3.6), et, comme pièce intercalaire, une tige cylindrique (3.3), et le corps de guidage (6) possède, sur son extrémité inférieure, un organe de guidage plat (8), le téton d'actionnement (3) étant guidé, en étant immobilisé en rotation, par l'organe de guidage (8) appliqué contre le méplat (3.7) situé à l'opposé du téton de verrouillage (4).

6. Dispositif de surveillance selon la revendication 2, caractérisé en ce que le verrou (5) possède une surface inclinée montante (5.1) et une encoche de retenue (5.2) destinée à recevoir le téton de verrouillage.

Fig.2      Fig.3